# EUROPEAN PATENT APPLICATION

(11) **EP 4 693 122 A1**
(43) Date of publication of application: **11.02.2026**
(21) Application number: 25190089.0
(22) Date of filing: 17.07.2025
(51) Int. Cl.: G06Q 10/00, G05B 19/418

(54) **CONTROL SYSTEM**

(30) Priority: 09.08.2024 JP 2024134440
(71) Applicant: TOYOTA JIDOSHA KABUSHIKI KAISHA, Toyota-shi, Aichi-ken 471-8571 (JP)
(72) Inventor: IWAHORI, Kento, Toyota-shi, 471-8571 (JP); KOIDE, Toshihiro, Toyota-shi, 471-8571 (JP); KATOU, Jyunya, Toyota-shi, 471-0856 (JP)
(74) Representative: J A Kemp LLP

(57) **Abstract**

A control system includes a moving object, an acquisition unit, and a control unit. Equipment a state of which is changeable is installed on the moving object and the moving object is movable by unmanned driving. The acquisition unit acquires work information that is at least one of personal information on a worker who engages in work to the moving object, and content information indicating a work content. The control unit uses the acquired work information to change the state of the equipment.

## Description

### BACKGROUND

### FIELD

The present disclosure relates to a control system.

### RELATED ART

Conventionally, known vehicles run by unmanned driving in factories (Japanese Translation of PCT International Application Publication No. JP-T-2017-538619).

A worker may ride on and operate a vehicle to inspect the vehicle. In this case, the worker may change a position and/or a posture of equipment, such as a seat, a steering, and a door mirror, in accordance with his/her feature, such as a physique. Moreover, when a component is assembled to a vehicle, or a vehicle is repaired, a worker may change a position and/or a posture of equipment, such as a seat and a steering, and/or change an open-close state of equipment, such as a door mirror, a power door, and a power window, in accordance with a work content. An appropriate state of equipment installed on a vehicle differs depending on a feature of a worker and a work content. When a worker performs operation to change a state of equipment, work time may increase. Such a problem occurs not only to a vehicle, but is in common with a moving object.

### SUMMARY

The present disclosure is achievable as the following aspects.
(1) According to one aspect of the present disclosure, a control system is provided. The control system includes a moving object, an acquisition unit, and a control unit. Equipment a state of which is changeable is installed on the moving object, and the moving object is movable by unmanned driving. The acquisition unit acquires work information that is at least one of personal information on a worker who engages in work to the moving object, and content information indicating a work content. The control unit uses the acquired work information to change the state of the equipment. According to this aspect, the control system can automatically change the state of the equipment in accordance with a feature of the worker and/or the work content without causing the worker to perform operation to change the state of the equipment. Accordingly, the control system can shorten work time.
(2) In the aspect described above, the control unit may complete changing of the state of the equipment before a start of the work. According to this aspect, the control system can change the state of the equipment in advance before the start of the work. Accordingly, the control system can further shorten work time.
(3) In the aspect described above, the acquisition unit may acquire at least the content information. When the work content identified by the content information includes operation work in which the worker rides on and operates the moving object, the acquisition unit may acquire the personal information on the worker who engages in the operation work, and the control unit may use the acquired personal information to change the state of the equipment. According to this aspect, the control system can change the state of the equipment to the appropriate state in accordance with a feature of the worker who engages in the operation work. Accordingly, the worker can easily operate the moving object.
(4) In the aspect described above, the control system may further include a memory that stores a database in which the work information and the state of the equipment are associated with one another. The control unit may refer to the database to identify the state of the equipment associated with the acquired work information, and change the state of the equipment to be the identified state. According to this aspect, the control system can refer to the database to easily change the state of the equipment to the appropriate state in accordance with a feature of the worker and/or the work content.
(5) In the aspect described above, the memory may store a plurality of the databases prepared for each type of the moving object. The acquisition unit may further acquire type information indicating the type of the moving object. When the control unit identifies the state of the equipment, the control unit may refer to the database for the type identified by the acquired type information among the plurality of databases. According to this aspect, the control system can change the equipment to be the more appropriate state in accordance with the type of the moving object.
The present disclosure can be implemented also in various aspects other than the control system described above. For example, the present disclosure can be implemented in aspects, such as a production method of a control system, a control method of equipment, a computer program to implement the control method, and a non-transitory recording medium recording the computer program.

### BRIEF DESCRIPTION OF THE DRAWINGS

Fig. 1 is a schematic diagram illustrating a configuration of a control system according to a first embodiment;
Fig. 2 is a block diagram illustrating a configuration of the control system;
Fig. 3 is a diagram illustrating one example of a database;
Fig. 4 is a diagram illustrating another example of the database;
Fig. 5 is a flowchart illustrating a procedure for running control according to the first embodiment;
Fig. 6 is a flowchart illustrating one example of a method for controlling equipment;
Fig. 7 is an explanatory diagram illustrating a schematic configuration of a control system according to a second embodiment; and
Fig. 8 is a flowchart illustrating a procedure for running control according to the second embodiment.

### DETAILED DESCRIPTION

### A. First Embodiment

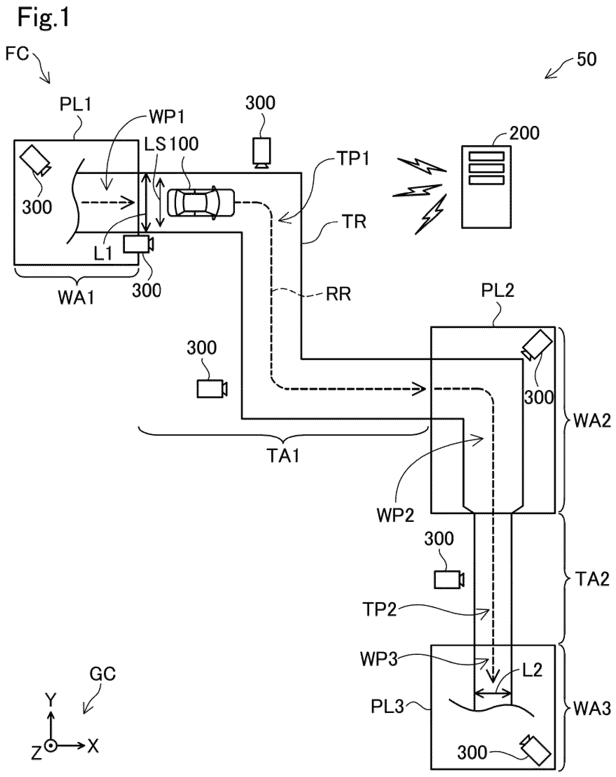

Fig. 1 is a schematic diagram illustrating a configuration of a control system 50 according to a first embodiment. The control system 50 includes one or more vehicles 100 as a moving object, a server 200, and one or more external sensors 300.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a four-wheel vehicle, a construction vehicle, or a combat vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In this embodiment, the control system 50 is used in a factory FC in which the vehicle 100 is produced. A reference coordinate system in the factory FC is a global coordinate system GC, and any position in the factory FC can be represented by X, Y, and Z coordinates in the global coordinate system GC. In this embodiment, the factory FC includes a first place PL1, a second place PL2, a third place PL3, and a track TR connecting the places PL1 to PL3. A plurality of production steps is executed to the vehicle 100 while the vehicle 100 moves on the track TR. The track TR includes a first work area WA1 located at the first place PL1. In the first work area WA1, a first work step WP1 to perform first work to the vehicle 100 among the plurality of production steps is executed. The track TR includes a first transport area TA1 connecting the first place PL1 and the second place PL2 to one another. In the first transport area TA1, a first transport step TP1 to transport the vehicle 100 from the first place PL1 to the second place PL2 among the plurality of production steps is executed. The track TR includes a second work area WA2 located at the second place PL2. In the second work area WA2, a second work step WP2 to perform second work to the vehicle 100 among the plurality of production steps is executed. The track TR includes a second transport area TA2 connecting the second place PL2 and the third place PL3 to one another. In the second transport area TA2, a second transport step TP2 to transport the vehicle 100 from the second place PL2 to the third place PL3 among the plurality of production steps is executed. The track TR includes a third work area WA3 located at the third place PL3. In the third work area WA3, a third work step WP3 to perform third work to the vehicle 100 among the plurality of production steps is executed. The first work area WA1, the first transport area TA1, and the second work area WA2 of the track TR have a track width L1 wider than a reference width LS determined in advance. The second transport area TA2 and the third work area WA3 of the track TR have a track width L2 narrower than the reference width LS. The first work area WA1, the second work area WA2, the second transport area TA2, and the third work area WA3 of the track TR are located indoors. The first transport area TA1 of the track TR is located outdoors.

In the factory FC, the plurality of external sensors 300 is disposed along the track TR. The external sensor 300 is a sensor located outside of the vehicle 100. The external sensor 300 in this embodiment is a sensor that captures the vehicle 100 from the outside of the vehicle 100. The external sensor 300 includes a communication device (not illustrated) and can communicate with another device, such as the server 200, by wired or wireless communication. Specifically, the external sensor 300 includes a camera. The camera as the external sensor 300 images the vehicle 100 and outputs the captured image as a detection result. A position of each external sensor 300 in the factory FC is adjusted in advance.

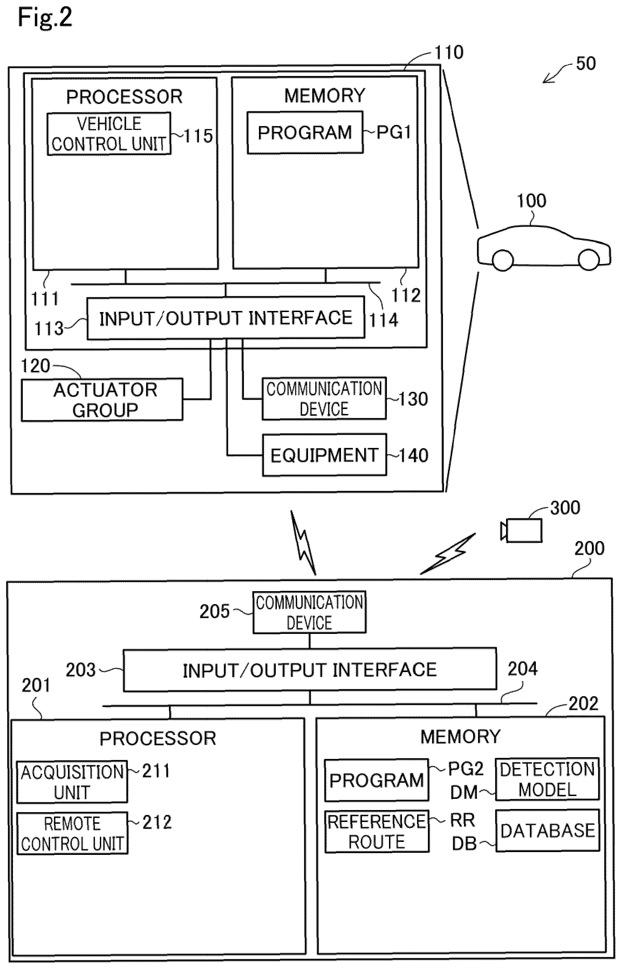

Fig. 2 is a block diagram illustrating a configuration of the control system 50. The vehicle 100 includes a vehicle control device 110 to control each unit of the vehicle 100, an actuator group 120 including one or more actuators that are driven under control of the vehicle control device 110, and a communication device 130 to communicate with an external device, such as the server 200, by wireless communication. The actuator group 120 includes an actuator of a driving device to accelerate the vehicle 100, an actuator of a steering device to change a traveling direction of the vehicle 100, and an actuator of a braking device to decelerate the vehicle 100.

Furthermore, equipment 140 capable of changing various states, such as a position, a posture, and an open-closer state, is installed on the vehicle 100. Along with this, the actuator group 120 further includes a specific actuator to change the state of the equipment 140. The equipment 140 is an electrically-adjustable seat, for example. Below, the "electrically-adjustable seat" is simply referred to as a "seat". In this case, the specific actuator is a seat adjustment device to change a state of the seat. The equipment 140 may be an electrically-controllable tilt and telescopic steering. Below, the "electrically-controllable tilt and telescopic steering" is simply referred to as a "steering". In this case, the specific actuator is a steering adjustment device to change a state of the electrically-controllable steering. The equipment 140 may be an electrically-adjustable door mirror. Below, the "electrically-adjustable door mirror" is simply referred to as a "mirror". In this case, the specific actuator is a mirror adjustment device to change a state of the mirror. The equipment 140 may be a power door. Below, the "power door" is simply referred to as a "door". In this case, the specific actuator is a door opening-closing device to change a state of the door. The equipment 140 may be a power window. Below, the "power window" is simply referred to as a "window". In this case, the specific actuator is a window opening-closing device to change a state of the window. Note that the equipment 140 and the specific actuator other than those described above may be installed on the vehicle 100.

The vehicle control device 110 includes a computer including a processor 111, a memory 112, an input/output interface 113, and an internal bus 114. The processor 111, the memory 112, and the input/output interface 113 are coupled to one another via the internal bus 114 in a bidirectionally communicable manner. The actuator group 120 and the communication device 130 are coupled to the input/output interface 113. The processor 111 executes a program PG1 stored in the memory 112, thus functioning as a vehicle control unit 115.

The vehicle control unit 115 controls the actuator group 120 to cause the vehicle 100 to run. In this embodiment, the vehicle control unit 115 uses a running control signal received from the server 200 to control the actuator group 120, thereby causing the vehicle 100 to run. The running control signal is a control signal to cause the vehicle 100 to run. In this embodiment, the running control signal includes acceleration and a steering angle of the vehicle 100 as parameters. In another embodiment, instead of or in addition to the acceleration of the vehicle 100, the running control signal may include speed of the vehicle 100 as a parameter. In addition, in this embodiment, the vehicle control unit 115 uses an equipment control signal received from the server 200 to control the specific actuator, thereby changing a state of the equipment 140. The equipment control signal is a control signal to change the state of the equipment 140.

The server 200 includes a computer including a processor 201, a memory 202, an input/output interface 203, and an internal bus 204. The processor 201, the memory 202, and the input/output interface 203 are coupled to one another via the internal bus 204 in a bidirectionally communicable manner. A communication device 205 to communicate with various devices outside of the server 200 is coupled to the input/output interface 203. The communication device 205 can communicate with the vehicle 100 by wireless communication and can communicate with each external sensor 300 by wired or wireless communication. The processor 201 executes a program PG2 stored in the memory 202, thus functioning as an acquisition unit 211 and a remote control unit 212.

The acquisition unit 211 acquires work information. The work information is at least one of personal information and content information. The personal information is information on a worker who engages in work to the vehicle 100. The personal information is, for example, worker identification information that identifies the worker. The personal information may be feature information indicating a feature of the worker. The feature information includes, for example, physique information indicating a physique of the worker. The physique information includes, for example, information indicating at least any of a height, a sitting height, a leg length, an arm length, and an eye level of the worker. The feature information may include habit information indicating habit of the worker. The habit information includes, for example, information indicating a dominant hand of the worker. The content information is information indicating a work content to the vehicle 100. The content information includes, for example, step identification information that identifies the plurality of production steps. The content information may include operation information indicating whether to include operation work in which the worker rides on and operates the vehicle 100. The content information may include target information indicating a work target part of the vehicle 100. The content information may include environment information indicating environment related to running, such as the track widths L1 and L2, and whether a running place is indoors or outdoors. The content information may include order information indicating execution order of the plurality of production steps determined in advance.

The remote control unit 212 acquires a detection result of a sensor and uses the detection result to generate the running control signal to control the actuator group 120 of the vehicle 100. The remote control unit 212 then transmits the running control signal to the vehicle 100, thereby causing the vehicle 100 to run by remote control. Moreover, the remote control unit 212 uses acquired work information to generate the equipment control signal. The remote control unit 212 then transmits the equipment control signal to the vehicle 100, thereby changing the state of the equipment 140 by remote control. In this embodiment, the remote control unit 212 refers to a database DB that is stored in the memory 202 of the server 200 and that associates the work information and an appropriate state of the equipment 140 with one another. Accordingly, the remote control unit 212 identifies the state of the equipment 140 associated with the acquired work information, and thus generates the equipment control signal to change the state of the equipment 140 to the identified state.

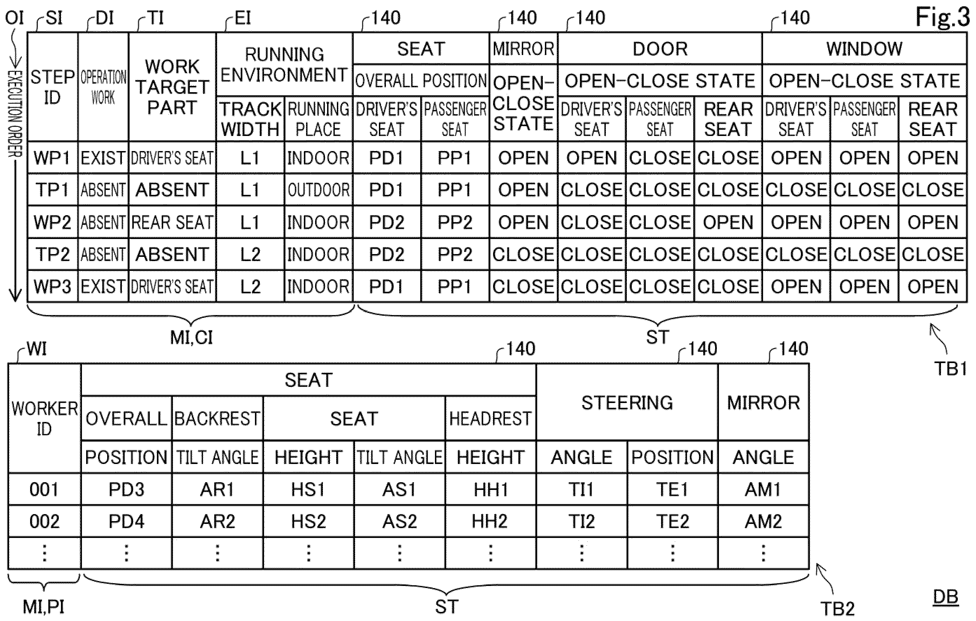

Fig. 3 is a diagram illustrating one example of the database DB. The database DB illustrated in Fig. 3 includes a content table TB1 and a worker-basis table TB2. The content table TB1 shows an appropriate state ST of the equipment 140 in accordance with a work content. In the example of the content table TB1 illustrated in Fig. 3, step identification information SI, operation information DI, target information TI, environment information EI, and order information OI as content information CI in work information MI are associated with the states ST of the seat, the mirror, the door, and the window as the equipment 140. In detail, in the content table TB1, as the appropriate state ST of the equipment 140, a position PD1, PD2, PP1, PP2 of each seat in a front-rear direction, an open-close state of the mirror, an open-close state of each door, and an open-close state of each window of the vehicle 100 are defined. The worker-basis table TB2 indicates the appropriate state ST of the equipment 140 on a per worker basis. In the example of the worker-basis table TB2 illustrated in Fig. 3, worker identification information WI as personal information PI in the work information MI is associated with the states ST of the seat, the steering, and the mirror as the equipment 140. In detail, in the worker-basis table TB2, as the appropriate state ST of the equipment 140, positions PD3 and PD4 of the seat, tilt angles AR1 and AR2 of a backrest, heights HS1 and HS2 and tilt angles AS1 and AS2 of a seat surface, and heights HH1 and HH2 of a headrest at a driver's seat are defined. In addition, in the worker-basis table TB2, as the appropriate state ST of the equipment 140, angles TI1 and TI2 and positions TE1 and TE2 of the steering, and angles AM1 and AM2 of the mirror are defined.

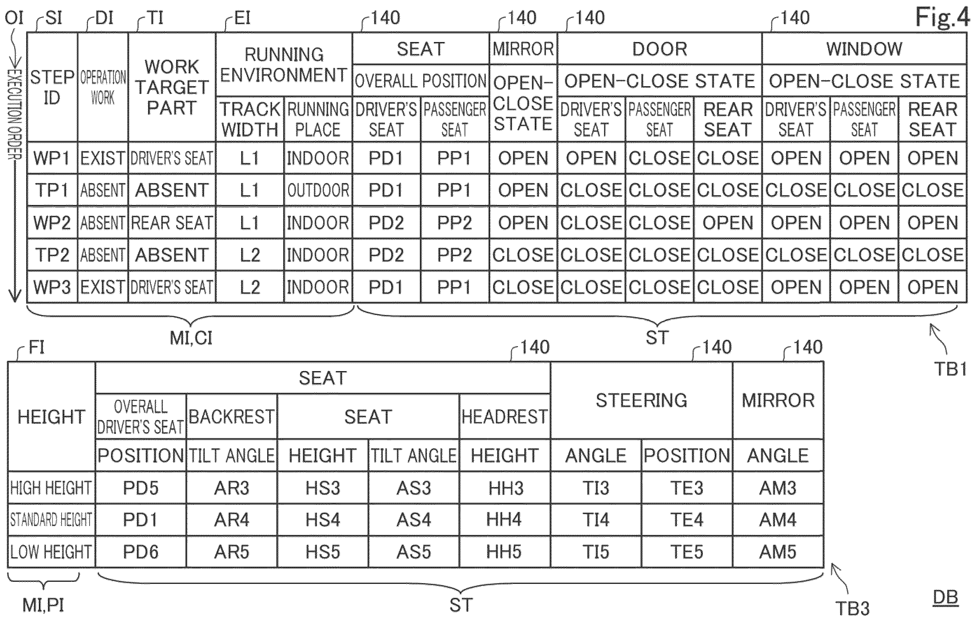

Fig. 4 is a diagram illustrating another example of the database DB. The database DB illustrated in Fig. 4 includes the content table TB1 and a physique-basis table TB3. The physique-basis table TB3 illustrated in Fig. 4 shows the appropriate state ST of the equipment 140 in accordance with a physique of the worker. In the example of the physique-basis table TB3 illustrated in Fig. 4, the state ST of the equipment 140 is defined for each of three sections classified in accordance with a height of the worker. In detail, in the physique-basis table TB3, feature information FI as the personal information PI in the work information MI is associated with the states ST of the seat, the steering, and the mirror as the equipment 140. In more detail, in the physique-basis table TB3, as the appropriate state ST of the equipment 140, positions PD1, PD5, and PD6 of the seat, tilt angles AR3 to AR5 of a backrest, heights HS3 to HS5 and tilt angles AS3 to AS5 of a seat surface, and heights HH3 to HH5 of a headrest at a driver's seat are defined. In addition, in the physique-basis table TB3, as the appropriate state ST of the equipment 140, angles TI3 to TI5 and positions TE3 to TE5 of the steering, and angles AM3 to AM5 of the mirror are defined.

In the physique-basis table TB3, for example, the state ST of the equipment 140 is defined as follows. The position of the seat of the driver's seat is defined in such a manner that, based on the position PD1 for a standard height, the position PD5 goes rearward as the height increases, and the position PD6 goes forward as the height decreases. The tilt angle of the backrest of the driver's seat is defined in such a manner that, based on the tilt angle AR4 for the standard height, the tilt angle AR3 increases as the height increases, and the tilt angle AR5 decreases as the height decreases. The height of the seat surface of the driver's seat is defined in such a manner that, based on the height HS4 for the standard height, the height HS3 increases as the height increases, and the height HS5 decreases as the height decreases. The tilt angle of the seat surface of the driver's seat is defined in such a manner that, based on the tilt angle AS4 for the standard height, the tilt angle AS3 increases as the height increases, and the tilt angle AS5 decreases as the height decreases. The height of the headrest of the driver's seat is defined in such a manner that, based on the height HH4 for the standard height, the height HH3 increases as the height increases, and the height HH5 decreases as the height decreases.

Note that the configuration of the database DB is not limited to that described above as long as the database DB includes at least one of the table TB1 and the table TB2, TB3 depending on a type of the work information MI acquired. In the table TB1, the content information CI and the state ST of the equipment 140 are associated with one another. In the table TB2, TB3, the personal information PI and the state ST of the equipment 140 are associated with one another. The appropriate state ST of the equipment 140 can be changed as appropriate in accordance with a situation.

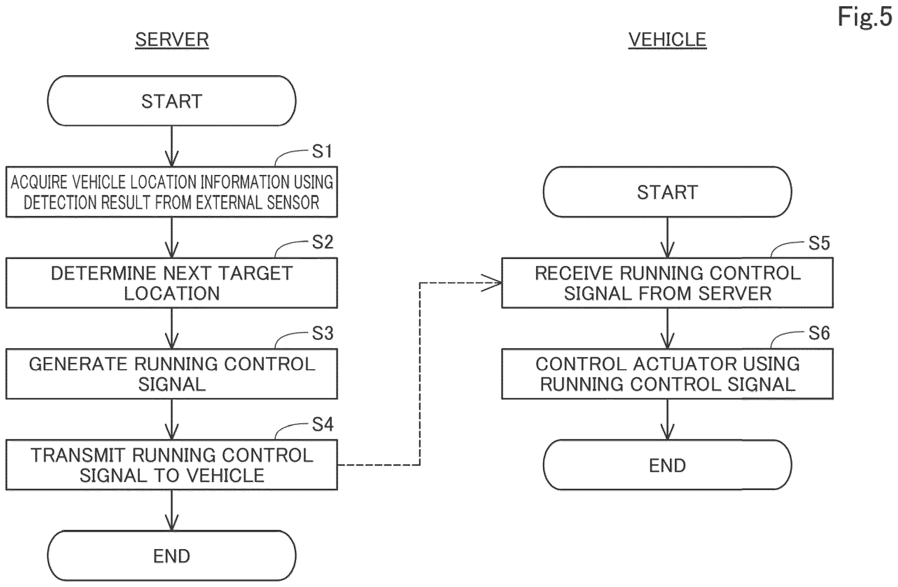

Fig. 5 is a flowchart illustrating a procedure for running control of the vehicle 100 according to the first embodiment. In the procedure illustrated in Fig. 5, the processor 201 of the server 200 executes the program PG2, thus functioning as the remote control unit 212. Moreover, the processor 111 of the vehicle 100 executes the program PG1, thus functioning as the vehicle control unit 115.

At Step S1, the processor 201 of the server 200 uses a detection result output from the external sensor 300 to acquire vehicle positional information. The vehicle positional information is positional information that serves as a basis for generation of the running control signal. In this embodiment, the vehicle positional information includes a position and orientation of the vehicle 100 in the global coordinate system GC of the factory FC. Specifically, at Step S1, the processor 201 uses a captured image acquired from a camera that is the external sensor 300 to acquire the vehicle positional information.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system, thereby acquiring the location of the vehicle 100. The outer shape of the vehicle 100 in the captured image may be detected by inputting the captured image to a detection model DM using artificial intelligence, for example. The detection model is prepared in the control system 50 or outside the control system 50. The detection model is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model DM and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route. The processor 201 determines the target location on the reference route ahead of a current location of the vehicle 100.

In step S3, the processor 201 of the server 200 generates a running control signal for causing the vehicle 100 to run toward the determined target location. In the present embodiment, the running control signal includes an acceleration and a steering angle of the vehicle 100 as parameters. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route, the processor 201 determines a steering angle and an acceleration in such a manner as to prevent the vehicle 100 from deviating from the reference route. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls actuator group 120 using the received running control signal, thereby causing the vehicle 100 to run at the acceleration and the steering angle indicated by the running control signal. The processor 111 repeats the reception of a running control signal and the control over the actuator group 120 in a predetermined cycle. According to the control system 50 in the present embodiment, it becomes possible to move the vehicle 100 without using a transport unit such as a crane or a conveyor.

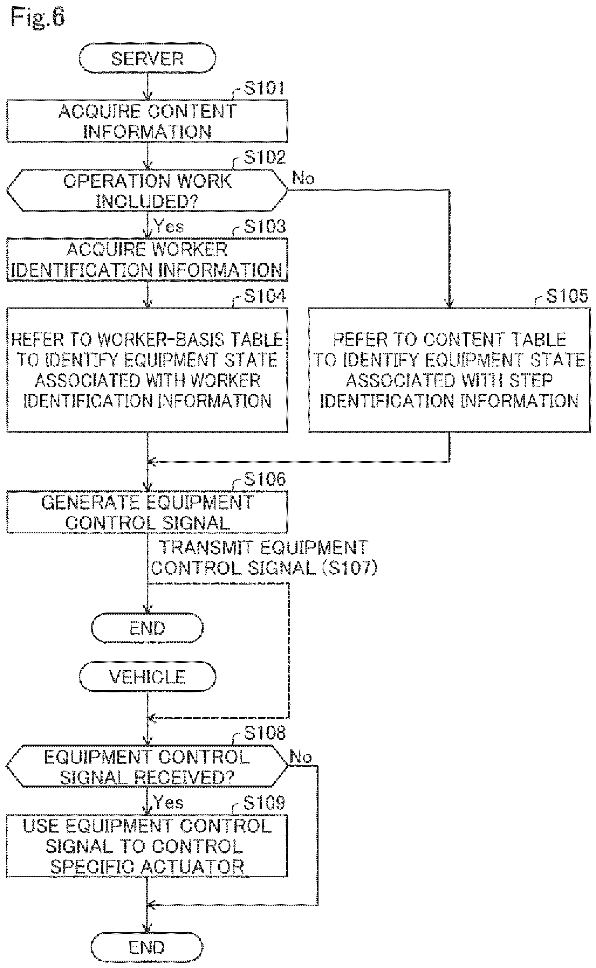

Fig. 6 is a flowchart illustrating one example of a method for controlling the equipment 140. For example, the control method illustrated in Fig. 6 is executed every time each of the work steps WP1 to WP3 is completed. In this embodiment, the server 200 determines whether each of the work steps WP1 to WP3 is completed. Then, if the server 200 determines that each of the work steps WP1 to WP3 is completed, the control method illustrated in Fig. 6 starts so that changing of the state ST of the equipment 140 is completed before a start of the next work. For example, the server 200 determines whether each of the work steps WP1 to WP3 is completed as follows. The server 200 executes an identification process that identifies the location of the vehicle 100 on the track TR among the areas TA1, TA2, and WA1 to WA3 by using the vehicle positional information to thereby identify the production step being executed to the vehicle 100 among the production steps TP1, TP2, and WP1 to WP3. The server 200 repetitively executes this identification process at predetermined periods, and thus detects shift of the production steps TP1, TP2, and WP1 to WP3 being executed to the vehicle 100. Then, when the server 200 detects the shift of each of the work steps WP1 to WP3 to each of the corresponding transport steps TP1 and TP2, the server 200 determines that each of the work steps WP1 to WP3 is completed. Note that the server 200 may determine that each of the work steps WP1 to WP3 is completed when a sensor or the like detects that the worker has got off the vehicle 100. Moreover, the server 200 may determine that each of the work steps WP1 to WP3 is completed when a sensor or the like detects that the worker has left the driver's seat.

At Step S101, the acquisition unit 211 of the server 200 acquires the content information CI including the step identification information SI and the operation information DI. If a work content identified by the content information CI includes operation work (Step S102: Yes), at Step S103, the acquisition unit 211 acquires the worker identification information WI on a worker who engages in the operation work. At Step S104, the remote control unit 212 of the server 200 refers to the worker-basis table TB2 of the database DB stored in the memory 202 to identify the state ST of the equipment 140 associated with the acquired worker identification information WI. If the work content identified by the content information CI does not include operation work (Step S102: No), the remote control unit 212 executes Step S105. At Step S105, the remote control unit 212 refers to the content table TB1 of the database DB stored in the memory 202 to identify the state ST of the equipment 140 associated with the acquired step identification information SI. At Step S106, the remote control unit 212 generates the equipment control signal to change the state ST of the equipment 140 to the identified state ST. At Step S107, the remote control unit 212 transmits the generated equipment control signal to the vehicle 100. If the vehicle 100 receives the equipment control signal (Step S108: Yes), the vehicle control unit 115 of the vehicle 100 executes Step S109. At Step S109, the vehicle control unit 115 uses the received equipment control signal to control the specific actuator, and thus changes the state ST of the equipment 140 to the state ST indicated by the equipment control signal.

According to the first embodiment, the server 200 can use the personal information PI as the work information MI to generate the equipment control signal to change the state ST of the equipment 140, and then transmit the generated equipment control signal to the vehicle 100 to change the state ST of the equipment 140. In this manner, the control system 50 can change the state ST of the equipment 140 by remote control in accordance with a feature of the worker without causing the worker to perform operation to change the state ST of the equipment 140. Moreover, according to the first embodiment, the server 200 can use the content information CI as the work information MI to generate the equipment control signal to change the state ST of the equipment 140, and then transmit the generated equipment control signal to the vehicle 100 to change the state ST of the equipment 140. In this manner, the control system 50 can change the state ST of the equipment 140 by remote control in accordance with a work content without causing the worker to perform operation to change the state ST of the equipment 140. Accordingly, the control system 50 can shorten work time. Furthermore, the control system 50 can reduce work load of the worker.

Moreover, according to the first embodiment, the acquisition unit 211 acquires at least the content information CI, and when a work content identified by the content information CI includes operation work, the personal information PI on a worker who engages in the operation work can be acquired. Then, the remote control unit 212 can use the acquired personal information PI to change the state ST of the equipment 140. In this manner, the control system 50 can change the state ST of the equipment 140 to the appropriate state ST in accordance with a feature of the worker who engages in the operation work. Accordingly, the worker can easily operate the vehicle 100.

Moreover, according to the first embodiment, the control system 50 includes the memory 202 storing the database DB in which the work information MI and the state ST of the equipment 140 are associated with one another. Accordingly, the control system 50 can refer to the database DB to identify the state ST of the equipment 140 associated with the acquired work information MI, and change the state ST of the equipment 140 to be the identified state ST. In this manner, the control system 50 can refer to the database DB to easily change the state ST of the equipment 140 to the appropriate state ST in accordance with a feature of the worker and/or the work content. Note that the control system 50 may identify the appropriate state ST of the equipment 140 in a method other than referring to the database DB. For example, the control system 50 may not refer to the database DB, but may estimate the appropriate state ST of the equipment 140 in accordance with execution order of the plurality of production steps TP1, TP2, and WP1 to WP3 to identify the appropriate state ST of the equipment 140.

Moreover, according to the first embodiment, the control system 50 can change the states ST of the seat, the steering, the mirror, the door, and the window as the equipment 140 in accordance with a feature of the worker and/or the work content.

Moreover, according to the first embodiment, in the content table TB1 of the database DB illustrated in Figs. 3 and 4, the position of the seat is defined in such a manner that a work space at a work target part can be secured in the second work step WP2 including work in the vehicle 100. Specifically, in the second work step WP2 including work at a rear seat, the positions PD2 and PP2 of the seats at a driver's seat and a passenger seat are respectively defined to be further forward than the positions PD1 and PP1 of the seats in the first work step WP1 including work at the driver's seat. Accordingly, the control system 50 can keep a larger space between the front seat and the rear seat. In this manner, the control system 50 can change the position of the seat in accordance with a work target part. Accordingly, the control system 50 can improve workability of the worker.

Moreover, according to the first embodiment, in the content table TB1, in the second transport step TP2 and the third work step WP3 in which the track width L2 is narrower than the reference width LS, the mirror and the door that are the equipment 140 that opens and closes in a width direction of the vehicle 100 are defined to be a close state. Accordingly, when the vehicle 100 runs in the area TA2, WA3 where the track width L2 is narrower than the reference width LS, the equipment 140 that opens and closes in the width direction of the vehicle 100 can be in the close state. In this manner, the control system 50 can change the state ST of the equipment 140 in accordance with the track width L1, L2. Accordingly, the control system 50 can avoid contact of the equipment 140 with production equipment, a building wall, or the like placed along the track TR.

Moreover, according to the first embodiment, in the content table TB1, the door at the work target part is defined to be an open state in the first work step WP1 and the second work step WP2 including work in the vehicle 100. Accordingly, when the worker works in the vehicle 100, the control system 50 can cause the door at the work target part to be the open state. In this manner, the control system 50 can change the open-close state of the door in accordance with a work target part. Accordingly, the control system 50 can shorten time required for the worker to ride on the vehicle 100. Furthermore, in a case in which the worker has difficulty in opening the door because of, for example, the worker gripping a tool, the control system 50 can allow the worker to start working without causing the worker to perform operation to open the door. Therefore, the control system 50 can further shorten work time. Note that, like the third work step WP3, even in the case of including work in the vehicle 100, when the track width L2 is narrower than the reference width LS, the control system 50 may cause the door that opens and closes in the width direction of the vehicle 100 to be the close state. Moreover, even in the case in which the track width L2 is narrower than the reference width LS, when the door to be controlled is a sliding door, the control system 50 may cause the door to be the open state.

Moreover, according to the first embodiment, in the content table TB1, each window is defined to be a close state in the first transport step TP1 in which the vehicle 100 runs in the first transport area TA1 located outdoors. Accordingly, when the vehicle 100 runs outdoors, the control system 50 can cause the window to be the close state. In this manner, the control system 50 can change the open-close state of the window in accordance with a running place. Accordingly, when the vehicle 100 runs outdoors, the control system 50 can prevent rain from entering the vehicle 100.

Moreover, according to the first embodiment, in the content table TB1, each window is defined to be an open state in the first work step WP1, the second work step WP2, and the third work step WP3 including work in the vehicle 100. Accordingly, when the worker works in the vehicle 100, the control system 50 can cause the window to be the open state. In this manner, the control system 50 can change the open-close state of the window in accordance with a work content. Accordingly, the worker can recognize sound outside of the vehicle 100 during work. Furthermore, in a case in which the vehicle 100 is an in-process product or a semi-finished product before inspection, the window may not open due to malfunction of a battery or the like. Even in this case, the control system 50 can cause the window to be the open state in advance. Therefore, the control system 50 can improve work safety.

Moreover, according to the first embodiment, in the content table TB1, the position of the seat at the driver's seat is defined to be the position PD1 for the standard height in the first work step WP1 and the third work step WP3 including operation work. In this way, in the content table TB1, the state ST for a standard physique may be set in advance as an initial value of the state ST of the equipment 140. In this manner, the control system 50 can reduce a change quantity of the state ST of the equipment 140. Accordingly, the control system 50 can shorten time required to change the state ST of the equipment 140. Therefore, in the case in which a work content identified by the content information CI includes operation work, the control system 50 can shorten work time even when the control system 50 does not use the personal information PI but uses the content information CI to change the state ST of the equipment 140.

Moreover, according to the first embodiment, the control system 50 can refer to the worker-basis table TB2 illustrated in Fig. 3 in the database DB to change the equipment 140 to be the more appropriate state ST on a per worker basis. Accordingly, the worker can more easily operate the vehicle 100.

Moreover, according to the first embodiment, the control system 50 can refer to the physique-basis table TB3 illustrated in Fig. 4 in the database DB to change the state ST of the equipment 140 in accordance with a physique of the worker. At this time, in the physique-basis table TB3, the state ST of the equipment 140 is defined for each of three sections classified in accordance with a height of the worker. In this manner, in the physique-basis table TB3, the state ST of the equipment 140 is defined per section classified in accordance with a physique of the worker, and therefore the control system 50 can change the state ST of the equipment 140 even without physique information indicating a physique of the worker in detail.

Moreover, according to the first embodiment, as illustrated in Fig. 1, after completion of each work step WP1, WP2, WP3, the transport step TP1, TP2 not including work to the vehicle 100 is executed before a start of the next work step WP1, WP2, WP3. When each of the work steps WP1 to WP3 is completed, the control system 50 can start the method for controlling the equipment 140 illustrated in Fig. 6. In this manner, in the transport step TP1, TP2 not including work to the vehicle 100, the equipment 140 can be changed to be the appropriate state ST. Accordingly, the control system 50 can further shorten work time.

Moreover, according to the first embodiment, the control system 50 can complete changing of the state ST of the equipment 140 before a start of the next work. In this manner, the control system 50 can change the state ST of the equipment 140 in advance before a start of the next work. Accordingly, it can be avoided that time required to change the state ST of the equipment 140 varies due to difference in the state ST of the equipment 140 depending on a feature of the worker, the work content, and the state ST of the equipment 140 before being changed. Therefore, the control system 50 can stabilize work time in each of the work steps WP1 to WP3. Moreover, the control system 50 completes changing of the state ST of the equipment 140 before the next work starts, and thus can further shorten work time. Accordingly, when operation speed to electrically change the state ST of the equipment 140 in an automatic manner by control from outside is slow, an increase in time required to change the state ST of the equipment 140 can be avoided, as compared with a case in which the state ST of the equipment 140 is mechanically changed in a manual manner.

Note that the control system 50 may start the control method as illustrated in Fig. 6 when each of the work steps WP1 to WP3 is completed, and may complete changing of the state ST of the equipment 140 after a start of the next work. Even in this manner, the control system 50 can start changing of the state ST of the equipment 140 in the transport step TP1, TP2 not including work. Accordingly, the control system 50 can shorten work time.

### B. Second Embodiment

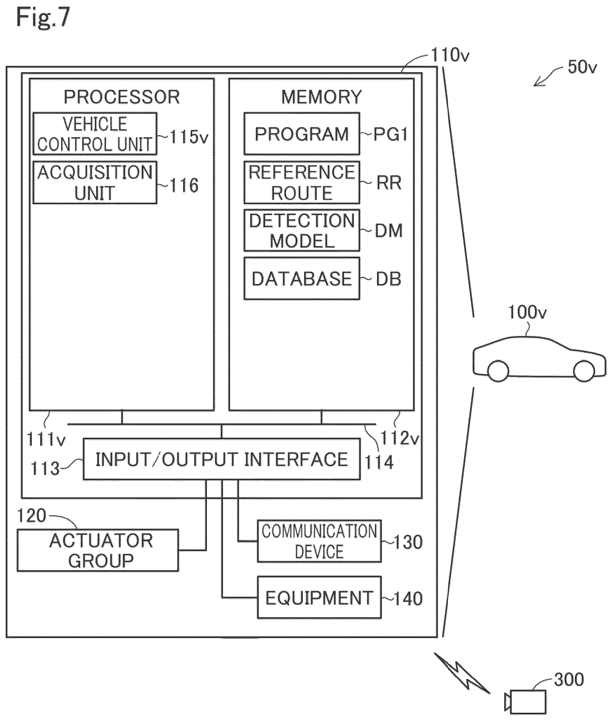

Fig. 7 is an explanatory diagram illustrating a schematic configuration of a control system 50v according to a second embodiment. In this embodiment, the control system 50v is different from that in the first embodiment in that the control system 50v does not include the server 200. Moreover, a vehicle 100v according to this embodiment is runnable by autonomous control of the vehicle 100v. The other configurations are the same as those in the first embodiment unless otherwise specified.

In this embodiment, a processor 111v of the vehicle control device 110v executes the program PG1 stored in a memory 112v, thus functioning as a vehicle control unit 115v and an acquisition unit 116. The acquisition unit 116 acquires the work information MI. The vehicle control unit 115v acquires an output result of a sensor and uses the output result to generate the running control signal. The vehicle control unit 115v then outputs the generated running control signal to cause the actuator group 120 to operate, thereby causing the vehicle 100v to run by autonomous control. Moreover, the vehicle control unit 115v uses the acquired work information MI to generate the equipment control signal. The vehicle control unit 115v then uses the generated equipment control signal to control the specific actuator, thereby changing the state ST of the equipment 140. In this embodiment, the memory 112v stores, in addition to the program PG1, a detection model DM, a reference route RR, and the database DB in advance.

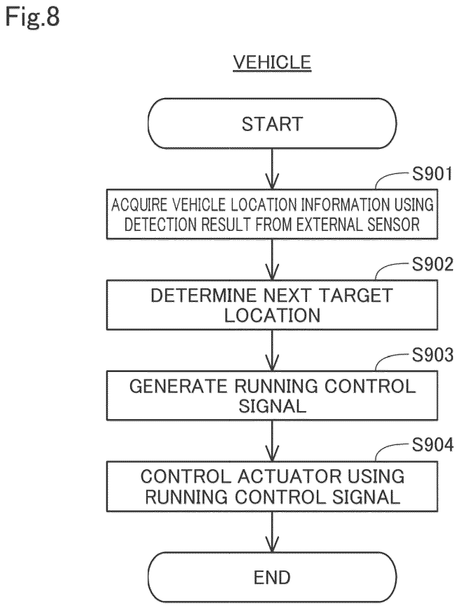

Fig. 8 is a flowchart illustrating a procedure for running control of the vehicle 100v according to the second embodiment. In the procedure in Fig. 8, the processor 111v of the vehicle 100v executes the program PG1, thus functioning as the vehicle control unit 115v.

In step S901, the processor 111v of the vehicle control device 110v acquires vehicle location information using detection result output from the camera as the external sensor 90. In step S902, the processor 111v determines a target location to which the vehicle 100v is to move next. In step S903, the processor 111v generates a running control signal for causing the vehicle 100v to run to the determined target location. In step S904, the processor 111v controls the actuator group 120 using the generated running control signal, thereby causing the vehicle 100v to run by following a parameter indicated by the running control signal. The processor 111v repeats the acquisition of vehicle location information, the determination of a target location, the generation of a running control signal, and the control over the actuator group 120 in a predetermined cycle. According to the control system 50v in the present embodiment, it is possible to cause the vehicle 100v to run by autonomous control without controlling the vehicle 100v remotely using the server 200.

According to the second embodiment, the control system 50v can change the state ST of the equipment 140 by autonomous control of the vehicle 100v in accordance with a feature of the worker and/or the work content without causing the worker to perform operation to change the state ST of the equipment 140.

### C. Other Embodiments

(C1) The method for controlling the equipment 140 as illustrated in Fig. 6 may be executed during shift time in which workers change in the same work steps WP1 to WP3. In this manner, in the case in which workers change in the same work steps WP1 to WP3, the control system 50, 50v can change the state ST of the equipment 140. Accordingly, the worker can easily operate the vehicle 100. Furthermore, the control system 50, 50v can utilize shift time of workers to change the equipment 140 to be the appropriate state ST. Accordingly, the control system 50, 50v can further shorten work time.

(C2) The memory 112v, 202 may store a plurality of databases DB prepared for each type of the vehicle 100, 100v. In this case, the acquisition unit 116, 211 further acquires type information indicating a type of the vehicle 100, 100v. When the control unit 115v, 212 identifies the state ST of the equipment 140, the control unit 115v, 212 refers to the database DB for the type identified by the acquired type information among the plurality of databases DB. In this manner, in a case in which a size, shape, arrangement, and the like of the equipment 140 are different depending on the type of the vehicle 100, 100v, the control system 50, 50v can change the equipment 140 to be the more appropriate state ST. Moreover, also in a case in which a size and shape of a body of the vehicle 100, 100v, a type and the number of pieces of the installed equipment 140, and the like are different depending on the type of the vehicle 100, 100v, the control system 50, 50v can change the equipment 140 to be the more appropriate state ST.

(C3) In a case in which the states ST of a plurality of pieces of the equipment 140 are changed, the control unit 115v, 212 may change the states ST of at least two or more pieces of the equipment 140 at the same time. In this manner, the control system 50, 50v can shorten time required to change the state ST of the equipment 140. Accordingly, the control system 50, 50v can further shorten work time.

(C4) In each of the above-described embodiments, the external sensor 300 is not limited to the camera but may be the distance measuring device, for example. The distance measuring device is a light detection and ranging (LiDAR) device, for example. In this case, detection result output from the external sensor 300 may be three-dimensional point cloud data representing the vehicle 100, 100v. The server 200 and the vehicle 100, 100v may acquire the vehicle location information through template matching using the three-dimensional point cloud data as the detection result and reference point cloud data, for example.

(C5) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(C6) In the above-described second embodiment, an internal sensor may be mounted on the vehicle 100v, and detection result output from the internal sensor may be used in at least one of the generation of the route and the generation of the running control signal. For example, the vehicle 100v may acquire detection result from the internal sensor, and in generating the route, may reflect the detection result from the internal sensor in the route. Vehicle 100v may acquire detection result from the internal sensor, and in generating the running control signal, may reflect the detection result from the internal sensor in the running control signal. the vehicle 100v may acquire detection result from the internal sensor, and in generating the running control signal, may reflect the detection result from the internal sensor in the running control signal.

(C7) In the above-described second embodiment, the vehicle 100v can be running by autonomous control, the vehicle 100v acquires vehicle location information using detection result from the external sensor. By contrast, the vehicle 100v may be equipped with an internal sensor, the vehicle 100v may acquire vehicle location information using detection result from the internal sensor, determine a target location to which the vehicle 100v is to move next, generate a route from a current location of the vehicle 100 indicated by the acquired vehicle location information to the target location, generate a running control signal for running along the generated route, and control the actuator group 120 of the vehicle 100v using the generated running control signal. In this case, the vehicle 100v is capable of running without using any detection result from an external sensor. The vehicle 100v may acquire target arrival time or traffic congestion information from outside the vehicle 100v and reflect the target arrival time or traffic congestion information in at least one of the route and the running control signal. The functional configuration of the control system 50v may be entirely provided at the vehicle 100v. Specifically, the processes realized by the control system 50v in the present disclosure may be realized by the vehicle 100v alone.

(C8) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(C9) In each of the above-described embodiments, the vehicle 100, 100v is simply required to have a configuration to become movable by unmanned driving. The vehicle 100, 100v may embodied as a platform having the following configuration, for example. More specifically, in order to fulfill three functions including "run," "turn," and "stop" by unmanned driving, the vehicle 100, 100v may include at least vehicle control device 110, 110v and actuator group 120. In order for the vehicle 100, 100v to acquire information from outside for unmanned driving, the vehicle 100, 100v is simply required to include the communication device 130 further. Specifically, the vehicle 100, 100v to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100, 100v before the vehicle 100, 100v is shipped from a factory, or a remaining component such as a bodyshell may be mounted on the vehicle 100, 100v after the vehicle 100, 100v is shipped from a factory while the remaining component such as a bodyshell is not mounted on the vehicle 100, 100v. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100, 100v in the first embodiments.

(C10) The vehicle 100, 100v may be manufactured by combining a plurality of modules. The module means a unit composed of one or more components grouped according to a configuration or function of the vehicle 100, 100v. For example, a platform of the vehicle 100, 100v may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100, 100v different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(C11)A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

The present disclosure is not limited to the embodiments described above, and can be implemented in various configurations without departing from the spirit of the present disclosure. For example, in order to solve a part or the entirety of the problem described above or to achieve a part or the entirety of the effects described above, the technical features in the embodiments corresponding to the technical features in the respective aspects described in Summary can be replaced or combined as appropriate. Unless the technical features are described as essential in this specification, the technical features can be deleted as appropriate.

## Claims

1. A control system (50; 50v) comprising:
a moving object (100; 100v) on which equipment (140) a state of which is changeable is installed, and movable by unmanned driving;
an acquisition unit (116; 211) configured to acquire work information that is at least one of personal information on a worker who engages in work to the moving object (100; 100v), and content information indicating a work content; and
a control unit (115v; 212) configured to use the acquired work information to change the state of the equipment (140).

2. The control system (50; 50v) according to claim 1, wherein the control unit (115v; 212) completes changing of the state of the equipment (140) before a start of the work.

3. The control system (50; 50v) according to claim 1, wherein the acquisition unit (116; 211) acquires at least the content information, and
when the work content identified by the content information comprises operation work in which the worker rides on and operates the moving object (100; 100v),
the acquisition unit (116; 211) acquires the personal information on the worker who engages in the operation work, and
the control unit (115v; 212) uses the acquired personal information to change the state of the equipment (140).

4. The control system (50; 50v) according to claim 1, further comprising a memory (112v; 202) configured to store a database in which the work information and the state of the equipment (140) are associated with one another, wherein
the control unit (115v; 212) refers to the database to identify the state of the equipment (140) associated with the acquired work information, and changes the state of the equipment (140) to be the identified state.

5. The control system (50; 50v) according to claim 4, wherein the memory stores a plurality of the databases prepared for each type of the moving object (100; 100v),
the acquisition unit (116; 211) further acquires type information indicating the type of the moving object (100; 100v), and
when the control unit (115v; 212) identifies the state of the equipment (140), the control unit (115v; 212) refers to the database for the type identified by the acquired type information among the plurality of databases.
